# EUROPEAN PATENT SPECIFICATION

(11) **EP 3 343 999 B1**
(45) Date of publication and mention of the grant of the patent: **09.06.2021**
(21) Application number: 18158186.9
(22) Date of filing: 07.11.2013
(51) Int. Cl.: H04W 74/08, H04W 76/15, H04W 74/00, H04W 84/04

(54) **NODES AND METHODS FOR RANDOM ACCESS IN DUAL CONNECTIVITY**
KNOTEN UND VERFAHREN FÜR DIREKTZUGRIFF IN EINER DUALKONNEKTIVITÄT
NOEUDS ET PROCÉDÉS D'ACCÈS ALÉATOIRE DANS UNE CONNECTIVITÉ DOUBLE

(30) Priority: 08.08.2013 US 201361863578 P
(43) Date of publication of application: 04.07.2018
(62) Divisional of application: 13795885.6
(73) Proprietor: Telefonaktiebolaget LM Ericsson (publ), 164 83 Stockholm (SE)
(72) Inventor: RAHMAN, Imadur, 191 46 SOLLENTUNA (SE); YANG, Yu, 170 62 SOLNA (SE); GUO, Zhiheng, BEIJING, 100102 (CN); LI, Shaohua, BEIJING, 100102 (CN); LARSSON, Daniel, 226 47 LUND (SE); SONG, Xinghua, BEIJING, 100102 (CN)
(74) Representative: Ericsson

(56) References cited:
- "3rd Generation Partnership Project;Technical Specification Group Radio Access Network; Evolved Universal Terrestrial Radio Access (E-UTRA);Study on Small Cell Enhancements for E-UTRA and E-UTRAN Higher layer aspects (Release 12)", 3GPP TR 36.842 V0.2.0, 1 May 2013 (2013-05-01), - 1 May 2013 (2013-05-01), XP002726218,
- ERICSSON: "LTE release 12, taking another step toward the networked society", ERICSSON WHITE PAPER, 1 January 2013 (2013-01-01), - 1 January 2013 (2013-01-01), pages 1-11, XP002726219,
- NTT DOCOMO ET AL: "Introduction of Dual Connectivity", 3GPP DRAFT; R2-140936_INTRODUCTION OF DUAL CONNECTIVITY_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 14 February 2014 (2014-02-14), XP050754700, Retrieved from the Internet: URL:http://www.3gpp.org/ftp/tsg_ran/WG2_RL 2/TSGR2_85/Docs/ [retrieved on 2014-02-14]

## Description

### TECHNICAL FIELD

Example embodiments presented herein are directed towards an anchor base station, an assisting base station and a wireless terminal, as well as corresponding methods therein, for establishing dual connectivity between the wireless terminal and the assisting base station in a wireless communications network.

### BACKGROUND

### Long Term Evolution

Long Term Evolution (LTE) uses Orthogonal Frequency Division Multiplexing (OFDM) in the downlink direction and a Discrete Fourier Transform (DFT)-spread OFDM in the uplink direction. The basic LTE downlink physical resource can thus be seen as a time-frequency grid, where each resource element corresponds to one OFDM subcarrier during one OFDM symbol interval. In the time domain, LTE downlink transmissions may be organized into radio frames of 10 ms, with each radio frame consisting of ten equally-sized subframes of length Tsubframe = 1 ms.

Furthermore, the resource allocation in LTE is typically described in terms of resource blocks, where a resource block corresponds to one slot, e.g., 0.5 ms, in the time domain and 12 subcarriers in the frequency domain. A pair of two adjacent resource blocks in time direction, e.g., 1.0 ms, is known as a resource block pair. Resource blocks are numbered in the frequency domain, starting with 0 from one end of the system bandwidth.

The notion of virtual resource blocks (VRB) and physical resource blocks (PRB) have been introduced in LTE. The actual resource allocation to a user equipment is made in terms of VRB pairs. There are two types of resource allocations, localized and distributed. In the localized resource allocation, a VRB pair is directly mapped to a PRB pair, hence two consecutive and localized VRBs are also placed as consecutive PRBs in the frequency domain. On the other hand, the distributed VRBs are not mapped to consecutive PRBs in the frequency domain, thereby providing frequency diversity for data channel transmitted using these distributed VRBs.

Downlink transmissions are dynamically scheduled, i.e., in each subframe the base station transmits control information regarding which terminals data is transmitted and upon which resource blocks the data is transmitted in the current downlink subframe. This control signaling is typically transmitted in the first 1, 2 or 3 OFDM symbols in each subframe and the number n=1, 2 or 3 is known as the Control Format Indicator (CFI) indicated by the physical CFI channel (PCHICH) transmitted in the first symbol of the control region. The control region also comprises physical downlink control channels (PDCCH) and possibly also physical HARQ indication channels (PHICH) carrying ACK/NACK for the uplink transmission. The downlink subframe also contains common reference symbols (CRS), which are known to the receiver and used for coherent demodulation of, e.g., the control information.

### Timing advances

In order to preserve the orthogonality in UL the UL transmissions from multiple user equipments need to be time aligned at the eNodeB. Since user equipments may be located at different distances from the eNodeB, the use equipments will need to initiate their UL transmissions at different times. A user equipment far from the eNodeB needs to start transmission earlier than a user equipment close to the eNodeB. This may, for example, be handled by timing advance of the UL transmissions; a user equipment starts its UL transmission before a nominal time given by the timing of the DL signal received by the user equipment.

The UL timing advance is maintained by the eNodeB through timing advance commands to the user equipment based on measurements on UL transmissions from that user equipment. This applies to all UL transmissions except for random access preamble transmissions on PRACH, for example, comprising transmissions on PUSCH, PUCCH, and SRS.

There is a strict relation between DL transmissions and the corresponding UL transmission. An example of this is the timing between a DL-SCH transmission on PDSCH to the HARQ ACK/NACK feedback transmitted in UL (either on PUCCH or PUSCH). A further example of the relation between DL and UL transmissions is the timing between an UL grant transmission on PDCCH or ePDCCH to the UL-SCH transmission on PUSCH.

An upper limit on the maximum timing advance has been defined by 3GPP in order to set a lower limit on the processing time available for a user equipment. For LTE, this value has been set to roughly 667us which corresponds to a cell range of 100km. It should be appreciated that the TA value compensates for the round trip delay.

In LTE Rel-8, there is only a single timing advance value per user equipment and all UL cells are assumed to have the same transmission timing. The reference point for the timing advance is the receive timing of the primary DL cell. In LTE Rel-11 different serving cells used by the same user equipment may have different timing advance. Most likely the serving cells sharing the same TA value, for example, depending on the deployment, will be configured by the network to belong to a so called TA group. If at least one serving cell of the TA group is time aligned, all serving cells belonging to the same group may use this TA value. To obtain time alignment for a SCell belonging to a different TA group than the PCell, the current 3GPP assumption is that network initiated random access may be used to obtain initial TA for this SCell and for the TA group the SCell belongs to.

### Random access

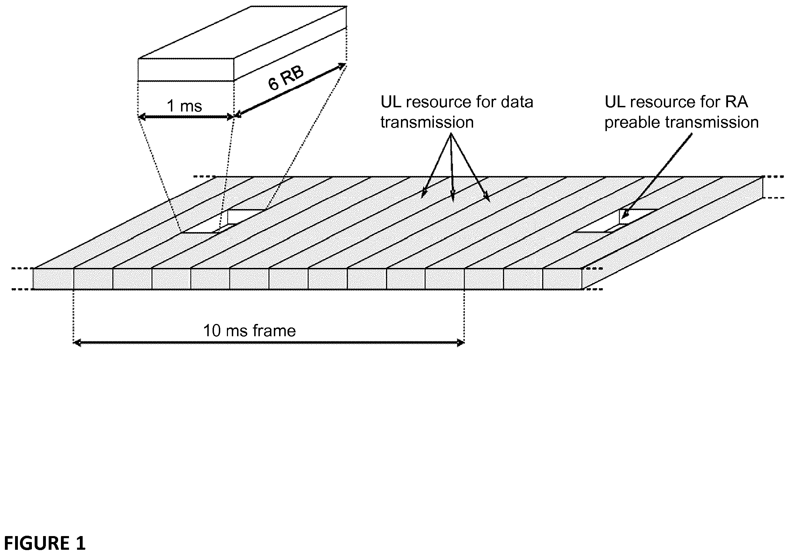

In LTE, as in any communication system, a mobile terminal may need to contact the network (via the eNodeB) without having a dedicated resource in the Uplink (from user equipment to base station). To handle this, a random access procedure is available where a user equipment that does not have a dedicated UL resource may transmit a signal to the base station. The first message of this procedure is typically transmitted on a special resource reserved for random access, a physical random access channel (PRACH). This channel may for instance be limited in time and/or frequency (as in LTE). **Figure 1** illustrates an example of a random access preamble transmission.

The resources available for PRACH transmission is provided to the terminals as part of the broadcasted system information in system information block 2 (SIB-2) or as part of dedicated RRC signaling in case of, for example, handover. The resources comprise a preamble sequence and a time/frequency resource. In each cell, there are 64 preamble sequences available. Two subsets of the 64 sequences are defined, where the set of sequences in each subset is signaled as part of the system information. When performing a (contention-based) random-access attempt, the terminal selects at random one sequence in one of the subsets. As long as no other terminal is performing a random-access attempt using the same sequence at the same time instant, no collisions will occur and the attempt will, with a high likelihood, be detected by the eNodeB.

In LTE, the random access procedure may be used for a number of different reasons. Examples of such reasons are initial access for user equipments in the RRC_IDLE state, incoming handover, resynchronization of the UL, scheduling request for a user equipment that is not allocated any other resource for contacting the base station, and/or positioning.

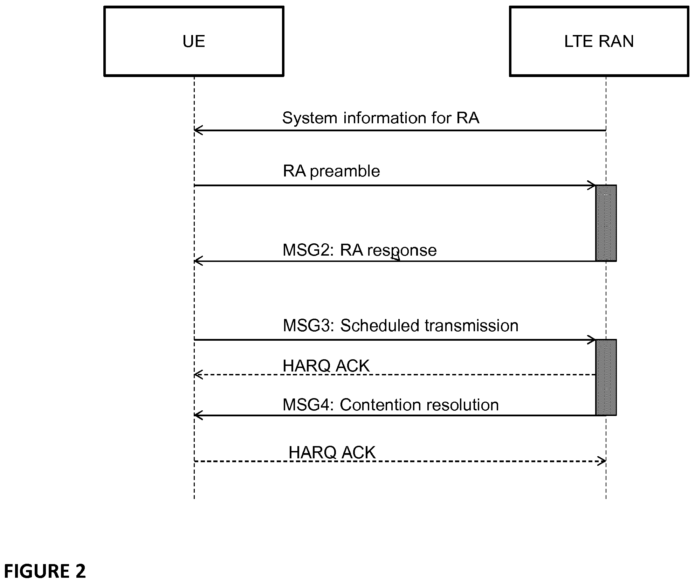

The contention-based random access procedure used in LTE Rel-8 is illustrated in **Figure 2****.** The user equipment starts the random access procedure by randomly selecting one of the preambles available for contention-based random access. The user equipment then transmits the selected random access preamble on the physical random access channel (PRACH) to eNodeB in RAN.

The RAN acknowledges any preamble it detects by transmitting a random access response (MSG2) comprising an initial grant to be used on the uplink shared channel, a temporary C-RNTI (TC-RNTI), and a timing alignment (TA) update based on the timing offset of the preamble measured by the eNodeB on the PRACH. The MSG2 is transmitted in the DL to the user equipment using the PDCCH and its corresponding PDCCH message that schedules the PDSCH comprises a cyclic redundancy check (CRC) which is scrambled with the RA-RNTI.

When receiving the response the user equipment uses the grant to transmit a message (MSG3) that in part is used to trigger the establishment of radio resource control and in part to uniquely identify the user equipment on the common channels of the cell. The timing alignment command provided in the random access response is applied in the UL transmission in MSG3.

In addition, the eNB may also change the resources blocks that are assigned for a MSG3 transmission by sending an UL grant that has its CRC scrambled with the TC-RNTI which was comprised in MSG2. In this case the PDCCH is used, to transmit the DCI containing the uplink grant.

The procedure ends with RAN solving any preamble contention that may have occurred for the case that multiple user equipments transmitted the same preamble at the same time. This may occur since each user equipment randomly selects when to transmit and which preamble to use. If multiple user equipments select the same preamble for the transmission on RACH, there will be contention between these user equipments that needs to be resolved through the contention resolution message (MSG4). The MSG4 has its PDCCH CRC scrambled with the C-RNTI if the user equipment previously has a C-RNTI assigned. If the user equipment does not have a C-RNTI previously assigned, the PDCCH CRC is scrambled with the TC-RNTI obtained from MSG2.

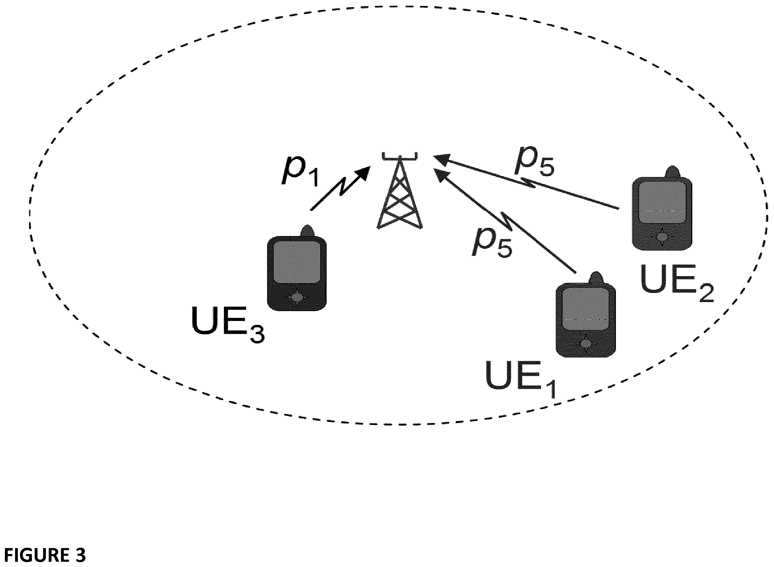

The case when contention occurs is illustrated in **Figure 3**, where two user equipments transmit the same preamble, p5, at the same time. A third user equipment also transmits at the same RACH, but since it transmits with a different preamble, p1, there is no contention between this user equipment and the other two user equipments.

The user equipment may also perform non-contention based random access. A non-contention based random access or contention free random access may, for example, be initiated by the eNB to get the user equipment to achieve synchronization in UL. The eNB initiates a non-contention based random access either by sending a PDCCH order or indicating it in an RRC message. The later of the two is used in case of HO.

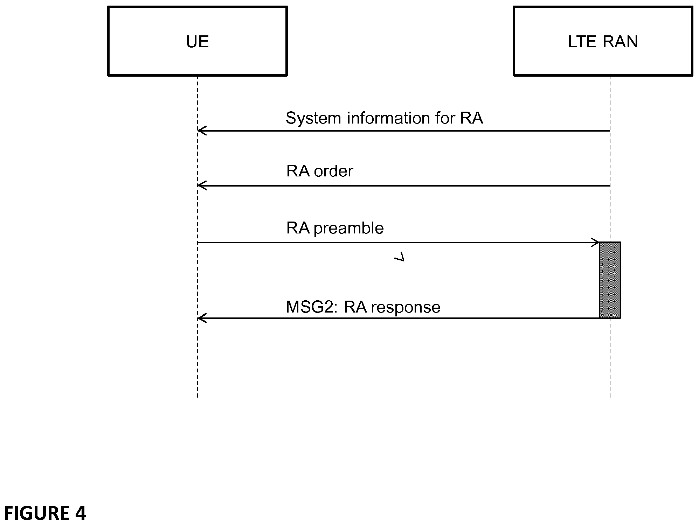

The eNB may also order the user equipment through a PDCCH message to perform a contention based random access. The procedure for the user equipment to perform contention free random access is illustrated in **Figure 4****.** Similar to the contention based random access the MSG2 is transmitted in the DL to the user equipment and its corresponding PDCCH message CRC is scrambled with the RA-RNTI. The user equipment considers the contention resolution successfully completed after it has received MSG2 successfully.

For the contention free random access, the MSG2 contains a timing alignment value similar to the contention based random access. This enables the eNB to set the initial/updated timing according to the user equipments transmitted preamble.

### PDCCH monitoring

A user equipment monitors a common search space and a user equipment specific search space in the PDCCH. In each search space, a limited number of candidates or equivalently PDCCH transmission hypothesis is checked. This is done in every DL subframe. These are known as blind decodes, and the user equipment checks whether any of the transmitted DCI messages are intended for it.

The user equipment monitors RNTI that are associated with the random access and paging procedures for each associated search spaces on PDCCH. An example of such an RNTI is the RA-RNTI for MSG2, which is monitored in the common search space. Another example of such an RNTI is the TC-RNTI for MSG3, which is monitored in the common search space, for reallocating the MSG3 in frequency. A further example of a monitored RNTI is the TC-RNTI for MSG4, which is monitored in the common search and user equipment specific TC-RNTI search space. Yet another example of a monitored RNTI is the C-RNTI for MSG4, which is monitored in the common search and user equipment specific C-RNTI search space. Yet another example of a monitored RNTI is the P-RNTI, which is monitored is monitored in the common search space.

### Dual connectivity

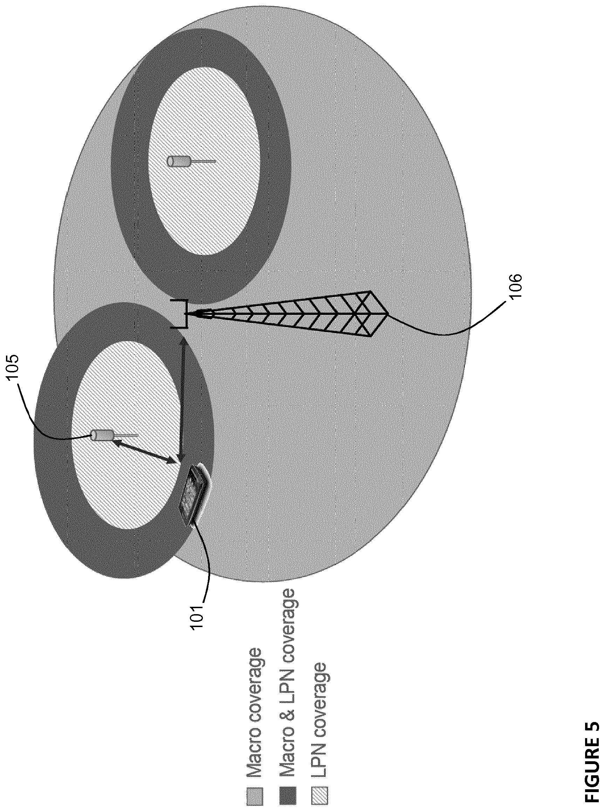

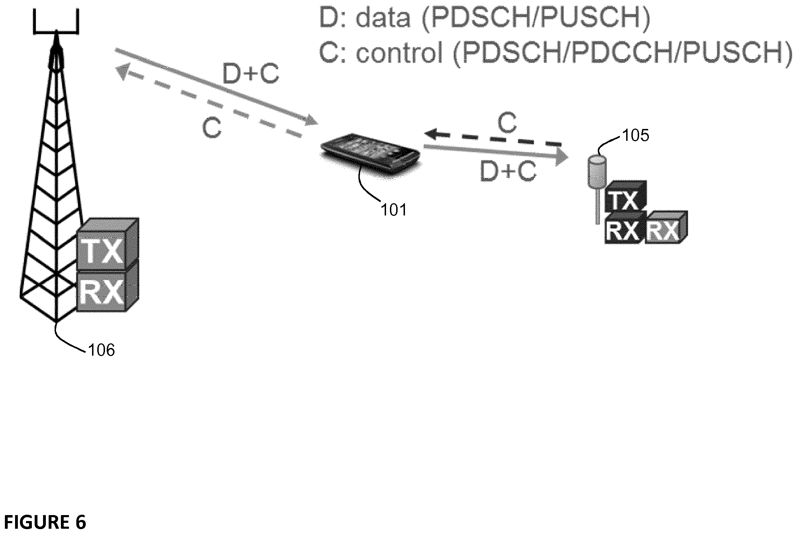

Dual connectivity is a feature defined from the user equipment perspective wherein the user equipment may simultaneously receive and transmit to at least two different network points, as illustrated in **Figure 5****.** As illustrated in Figure 5, in dual connectivity, a user equipment is in communications with an anchor base station or node 106 providing macro coverage and an assisting base station or node 105 providing LPN coverage. Example data and control paths of the anchor node 106, user equipment 101 and the assisting node 105 are illustrated in **Figure 6****.** Dual connectivity is one of the features that are considered for standardization under the small cell enhancements study item within 3GPP Rel-12.

Dual connectivity is defined for the case when the aggregated network points operate on the same or separate frequency. Each network point that the user equipment is aggregating may define a stand-alone cell or it may not define a stand-alone cell. It is further foreseen that from the user equipment perspective, the user equipment may apply some form of TDM scheme between the different network points that the user equipment is aggregating. This implies that the communication on the physical layer to and from the different aggregated network points may not be truly simultaneous.

Dual connectivity as a feature bears many similarities with carrier aggregation and CoMP. The main differentiating factor is that dual connectivity is designed considering a relaxed backhaul and less stringent requirements on synchronization requirements between the network points. This is in contrast to carrier aggregation and CoMP wherein tight synchronization and a low-delay backhaul are assumed between connected network points.

Document 3GPP TR 36.842 V0.2.0 (2013-05) discloses a Study on Small Cell Enhancements for E-UTRA and EUTRAN in Release 12.

### SUMMARY

It is envisioned that dual connectivity has some benefits. However, the issue of how multiple transmissions may be setup for user equipments with dual connectivity, in both same frequency and separate frequency deployment, needs to be addressed. Current specifications do not provide means for establishing such dual connectivity. The connection setup procedures comprising user equipment behavior and the necessary signaling should be specified.

Therefore, the example embodiments provide a means to setup multiple connections for user equipments operating with dual connectivity. According to some of the example embodiments, a user equipment with dual connectivity capabilities shall initiate random access to any accessible nodes. Then, a secondary connection UL, DL or both UL/DL may be activated with the assistance of the first connection. This method has the benefit of simplicity and effectiveness of managing multiple connections for user equipments with dual connectivity.

At least one example advantage of the example embodiments presented herein is to provide a framework for a random access procedure for dual connectivity systems. The example embodiments presented herein also provide network assisted PRACH allocations which will ensure that the collisions will not occur.

Accordingly, some of the example embodiments are directed towards a method, in an anchor base station, for establishing dual connectivity between a wireless terminal and an assisting base station. The wireless terminal is served by the anchor base station. The method is defined by independent claim 1.

Some of the example embodiments are directed towards an anchor base station for establishing dual connectivity between a wireless terminal and an assisting base station. The wireless terminal is served by the anchor base station. The anchor base station comprises processing circuitry configured to identify the assisting base station for dual connectivity with the wireless terminal. The processing circuitry is further configured to negotiate random access parameters and/or configuration parameters with the assisting base station. The anchor base station is defined by independent claim 4.

Some of the example embodiments are directed towards a method, in an assisting base station, for establishing dual connectivity between a wireless terminal and the assisting base station. The wireless terminal is served by an anchor base station. The method comprises negotiating random access parameters and/or configuration parameters with the anchor base station. The method is defined by independent claim 6.

Some of the example embodiments are directed towards an assisting base station for establishing dual connectivity between a wireless terminal and the assisting base station. The wireless terminal is served by an anchor base station. The assisting base station comprises processing circuitry configured to negotiate random access parameters and/or configuration parameters with the anchor base station. The assisting base station is defined by independent claim 7.

Some of the example embodiments are directed towards a method, in wireless terminal, for establishing dual connectivity between the wireless terminal and an assisting base station. The wireless terminal is served by an anchor base station. The method is defined by independent claim 8.

Some of the example embodiments are directed towards a wireless terminal for establishing dual connectivity between the wireless terminal and an assisting base station. the wireless terminal is served by an anchor base station. The wireless terminal is defined by independent claim 11.

### DEFINITIONS

- 3GPP: 3rd Generation Partnership Project
- ACK: Acknowledgement
- CA: Carrier Aggregation
- CFI: Control Format Indicator
- CoMP: Coordinated Multipoint Transmission
- CRC: Cyclic Redundancy Check
- C-RNTI: Cell Radio Network Temporary Identifier
- CRS: Common Reference Symbols
- CSI: Channel State Information
- DCI: Downlink Control Information
- DFT: Discrete Fourier Transform
- DL: Downlink
- eNB: eNodeB
- ePDCCH: Enhanced Physical Downlink Control Channel
- HARQ: Hybrid Automatic Repeat Request
- HO: Handover
- IE: Information Element
- LPN: Low Power Node
- LTE: Long Term Evolution
- MSG: Message
- NACK: Non-Acknowledgement
- OFDM: Orthogonal Frequency Division Multiplexing
- PCell: Primary Cell
- PCHICH: Physical CFI Channel
- PDCCH: Physical Downlink Control Channel
- PDSCH: Physical Downlink Shared Channel
- PHICH: Physical HARQ Channel
- PRACH: Physical Random Access Channel
- PRB: Physical Resource Block
- P-RNTI: Paging-Radio Network Temporary Identifier
- PUCCH: Physical Uplink Control Channel
- PUSCH: Physical Uplink Shared Channel
- RA: Random Access
- RACH: Random Access Channel
- RAN: Radio Access Network
- RAR: Random Access Response
- RA-RNTI: Random Access Radio Network Temporary Identifier
- RB: Resource Block
- RRC: Radio Resource Control
- Rx: Receive/Receiver
- SCell: Secondary Cell
- SCH: Synchronization Channel
- SIB: System Information Block
- SN: Sequence Number
- SRS: Sounding Reference Signal
- TA: Timing Advance
- TC-RNTI: Temporary C-RNTI
- TDM: Time Division Multiplexing
- Tx: Transmit/Transmitter
- UE: User Equipment
- UL: Uplink
- VRB: Virtual Resource Block

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is an illustrative example of a random access preamble transmission;
FIG. 2 is an illustrative example of signaling over the air interface for a contention based random access procedure in LTE;
FIG. 3 is an illustrative example of contention based random access between two user equipments;
FIG. 4 is an illustrative example of signaling over the air interface for a contention free random access procedure in LTE;
FIG. 5 is a depiction of dual connectivity;
FIG. 6 is a depiction of dual connectivity of a user equipment configured for simultaneous UL transmission;
FIGS. 7-9 are messaging diagrams depicting a random access procedure in dual connectivity, according to some of the example embodiments presented herein;
FIGS. 10-12 are messaging diagrams depicting coordinated PRACH allocations for multiple nodes, according to some of the example embodiments presented herein;
FIG. 13 is an example node configuration of an assisting and anchor base station, according to some of the example embodiments presented herein;
FIG. 14 is an example node configuration of a wireless terminal, also referred to as a user equipment, according to some of the example embodiments presented herein;
FIG. 15 is a flow diagram depicting example operations which may be taken by the anchor base station of FIG. 14, according to some of the example embodiments presented herein;
FIG. 16 is a flow diagram depicting example operations which may be taken by the assisting base station of FIG. 14, according to some of the example embodiments presented herein; and
FIG. 17 is a flow diagram depicting example operations which may be taken by the wireless terminal of FIG. 15, according to some of the example embodiments presented herein.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments.

It is envisioned that dual connectivity as shown in Figure 5 and/or Figure 6 has some benefits. However, the issue of how multiple transmissions may be setup for user equipments with dual connectivity, in both same frequency and separate frequency deployment, needs to be addressed. Current specifications do not provide means for establishing such dual connectivity. The connection setup procedures comprising user equipment behavior and the necessary signaling should be specified.

Therefore, the example embodiments provide a means to setup multiple connections for user equipments operating with dual connectivity. According to some of the example embodiments, a user equipment with dual connectivity capabilities shall initiate random access to any accessible nodes. Then, a secondary connection UL, DL or both UL/DL may be activated with the assistance of the first connection. This method has the benefit of simplicity and effectiveness of managing multiple connections for user equipments with dual connectivity.

In the following, the example embodiments are described in more detail. It should be appreciated that in explaining the example embodiments, the terms 'anchor node' and 'assisting node' are utilized. Furthermore, it should be appreciated that in figures the anchor node and assisting node are provided as base stations. However, any two nodes that are involved in any dual connectivity scenario may implement the described example embodiments.

Furthermore, in the explanation of the example embodiments, the term dual connectivity is used. However, the example embodiments are also valid for multiple connections. It should further be appreciated that the term booster and assisting may be used interchangeable. It should also be appreciated that the term user equipment and wireless terminal may be used interchangeably.

### Random access procedure in dual connectivity

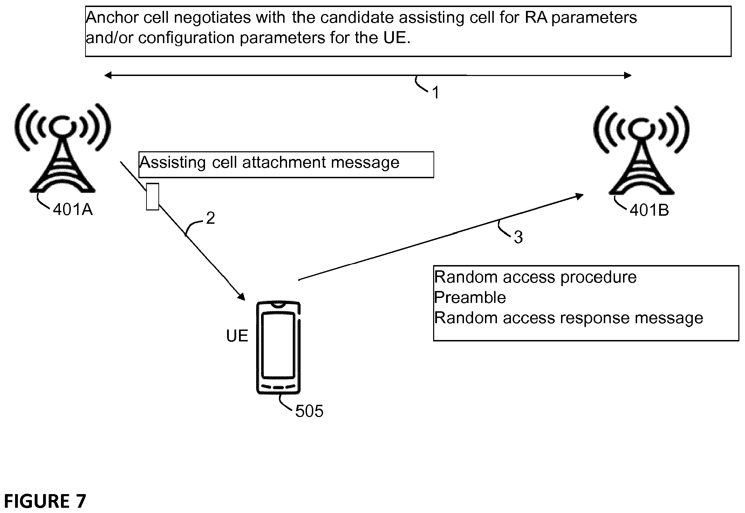

**Figures 7-9** illustrate different embodiments for a random access procedure in dual connectivity, according to some of the example embodiments presented herein. According to some of the example embodiments, the user equipment is initially attached to a single cell served by a base station and the network would like the user equipment to be attached to an additional assisting cell served by an assisting base station. The decision to attach the user equipment to an assisting base station or node by the network could for example be made because the network would like the user equipment to increase capacity in the network, give the user equipment high throughput, better mobility performance or lower power consumption. The steps involved to attach the user equipment to an assisting base station may vary. Here the focus is mainly on the random access resource the user equipment would need to have and how the random access procedure for attaching to the assisting base station would be defined.

It should be appreciated that the anchor node may be configured to identify another base station which may be suitable as functioning as an assisting node in dual connectivity with the user equipment (wireless terminal). This identification may be based on, for example, measurements provided by the wireless terminal or on a position or location of the wireless terminal.

According to some of the example embodiments, the current eNB that the user equipment 505 is attached to, which is here referred to as an anchor node 401A, negotiates with the additional cell about the applicable random access resource the user equipment 505 should utilize when attaching to this cell. The cell that the user equipment 505 will attach to is referred to as an assisting cell served by an assisting node or base station 401B. The random access parameters that the eNB negotiates about is, for example, the signaling content that is applicable for the candidate assisting cell of IE *PRACH-Config* and *RACH-ConfigCommon*, as described in 3GPP TS 36.331. Such negotiation is illustrated in Figures 7-9 via messages 1, 1a and 1a, respectively.

The candidate assisting cell served by the assisting node 401B and the anchor node 401A further negotiate about the dedicated random access parameters the specific user equipment 505 should use when attaching to the assisting node 401B. Such parameters may for example correspond to the content of IE *RACH-ConfigDedicated*, as described in 3GPP TS 36.331. The negotiation procedure may be some interaction between the two eNBs, for example, the anchor eNB 401A sends a second link setup request to the assisting eNB 401B, and the assisting eNB sends back the parameters for the second link. Or if the assisting eNB 401B is controlled by the anchor 401A, the anchor will send the parameters for the second link setup to the assisting eNB. It should be appreciated that such negotiations may comprise message passing via the X2 interface or via a wireless interface. It should further be appreciated that the negotiations may be provided with the use of pre-existing messages or new messages.

In addition to the above negotiation, the anchor node 401A and candidate assisting node 401B may further negotiate about additional parameters that the user equipment 505 should be configured with when attaching to the assisting cell. Examples of such parameters could, for example, be the applicable transmission mode of the assisting cell, CSI reporting mode, bandwidth of the assisting cell and so on. And the parameters could also comprise some lEs in the system information for the assisting cell, so that the information could be sent to the user equipment 505 via the anchor 401A for the user equipment to prepare the second link setup, then the user equipment doesn't have to monitor the SIB for the assisting cell. This may enable a quick second link setup compared with the legacy random access procedure. Such negotiation is illustrated in Figures 7-9 via messages 1, 1b and 1b, respectively.

Compared with the handover procedure, the messages between the two eNBs will comprise more messages for the user equipment 505 to set up the second link. The messages assist the user equipment 505 in knowing more about the assisting cell instead of monitoring the parameters on the assisting cell since the user equipment may not have time to do that if the anchor and assisting cell are on the same frequency. Furthermore, it should be appreciated that the user equipment 505 is occupied with communicating with the anchor 401A for data traffic transferring. Another difference from handover is that there will be data and SN status transferring from the anchor to the assisting cell, etc.

The above negotiation may be performed either by the anchor node 401A deciding all of the parameters above and informing the assisting node 401B about the applicable configuration or by a mixture wherein the anchor node decides some of the parameters and the candidate assisting node decides some of the parameters. Thereafter, the candidate assisting node 401B informs the anchors node 401A about the applicable parameters. It may further be so that some of the parameters the anchor node is already aware of and some the anchor node is not aware of. For example, the bandwidth of the candidate assisting cell may not change over time, so the anchor node may store such information. However, the candidate assisting node 401B may inform the anchor node 401A about the dedicated random access parameters.

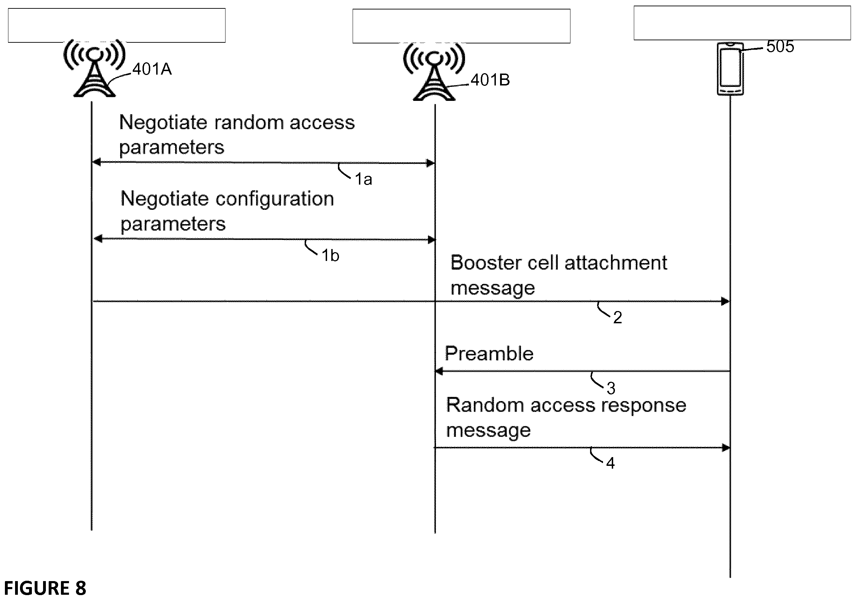

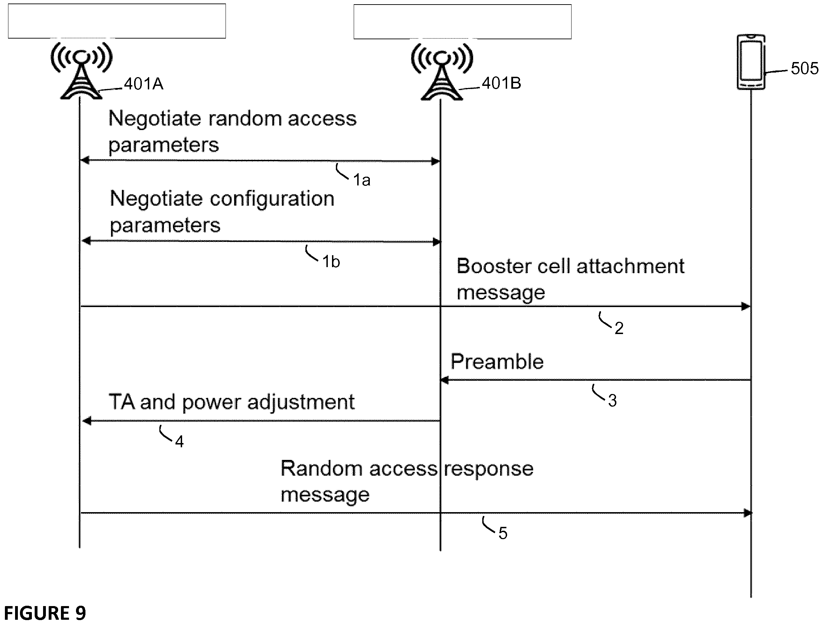

After the negotiation step above is completed, the anchor node 401A sends an assisting cell attachment message, for example, a RRC trigger or a PDCCH order, to the user equipment 505, which comprises the applicable random access parameters highlighted above and may also in addition comprise configuration parameters when operating at the assisting cell, as illustrated in message 2 of Figure 7. It should be appreciated that the attach message may also be sent from the anchor node to the assisting node. Thereafter, it is the assisting node which sends the attach message to the user equipment, as illustrated in Figures 8 and 9 via message 2.

The user equipment 505 would act on the received assisting attachment message and send the specified preamble at the given occasion on the assisting node 401B, as illustrated in Figures 7-9 via message 3. After the assisting node 401B would receive the preamble and calculate the applicable timing advance the user equipment 505 should apply and the applicable power adjustment. Here the assisting node 401B could send the message directly to the user equipment 505 in a random access response message which also comprises UL grant and the applicable power adjustment value, as illustrated in Figure 8 via message 4. Alternatively, the assisting node 401B would forward the applicable timing advance value, UL grant and the power adjustment value to the anchor node 401A which would then transmit the random access response message on the anchor cell to the user equipment 505, as illustrated in Figure 9 via messages 4 and 5.

### Coordinated PRACH allocations for multiple nodes

The anchor node 401A may allocate PRACH resources for both the anchor 401A and assisting 401B nodes to a certain user equipment 505 in the following two situations. First, when a dual connected user equipment is RRC_CONNECTED to an assisting node but not UL synchronized and needs to receive DL data. This is because of the fact that user equipment needs to HARQ in UL. Second, when a dual connected user equipment is RRC_CONNECTED to an assisting node, however, the assisting node is handing over to a second assisting node.

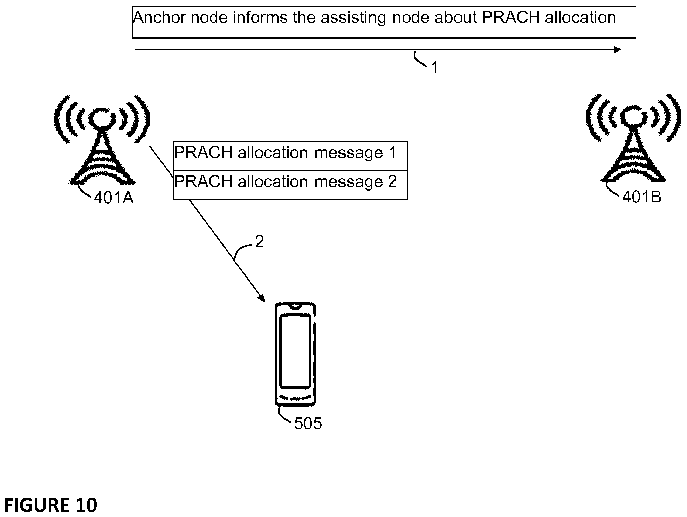

In both of the two cases discussed above, the user equipment uses open loop power level estimations for transmitting PRACH to two nodes. Thus, two different power levels are used for two different PRACH transmissions. This may be done by differentiating the PDCCH order implicitly or explicitly, for example, use an indication field similar to CIF in carrier aggregation or use a new C-RNTI, etc. This is illustrated in **Figure 10****.** In Figure 10, the anchor node 401A informs the assisting node 401B about the PRACH allocation for the assisting node (message 1). Thereafter, the anchor node 401A sends the user equipment 505 information regarding the separate PRACH allocations for the anchor 401A and assisting 401B nodes (message 2).

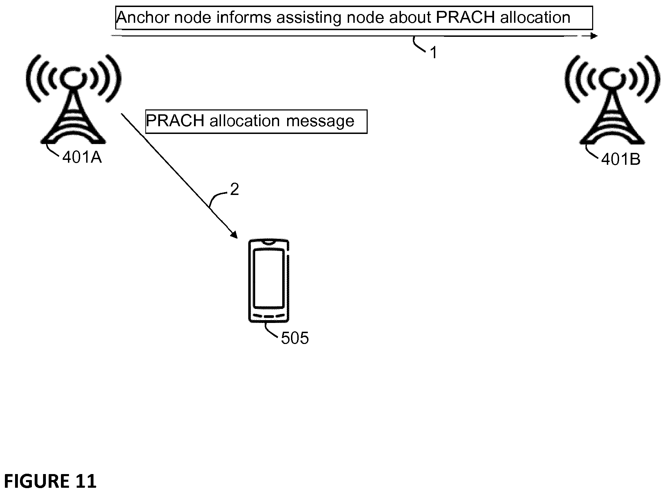

According to some of the example embodiments, the anchor node 401A may allocate only one PRACH resource to the user equipment 505 which is known to the assisting node 401B. In this case, both the anchor 401A and assisting 401B nodes measure on this PRACH allocation. The PRACH transmit power level will correspond to the link with larger pathloss. It should be appreciated that such a method may not be suitable when pathloss differences are very high between the links. This example embodiment is illustrated in **Figure 11****.** As shown in Figure 11, the anchor node 401A informs the assisting node 401B about the single PRACH allocation for the anchor and assisting nodes (message 1). Thereafter, the anchor node 401A sends the user equipment 505 information regarding the single PRACH allocation for the anchor and assisting nodes (message 2).

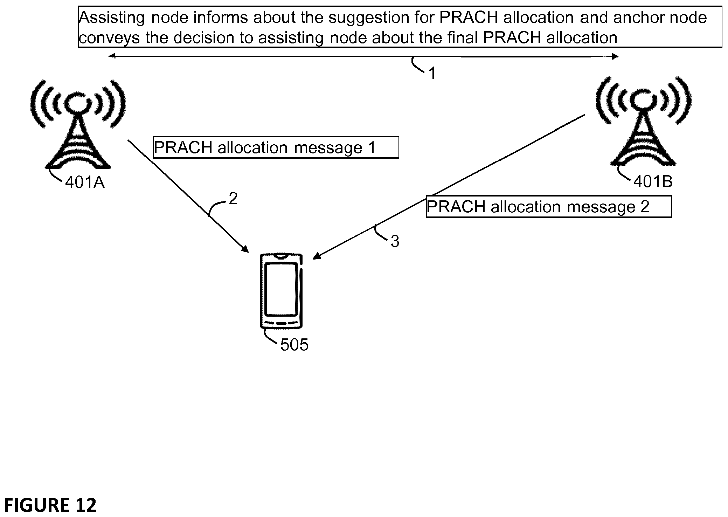

According to some of the example embodiments, the assisting node 401B may also allocate the PRACH resources and inform the anchor node 401A about it. The anchor node 401A confirms the allocation to avoid the overlapping PRACH allocations. This will require fast backhaul between nodes. This example embodiment is illustrated in **Figure 12****.** As shown in Figure 12, the assisting node 401B informs the anchor node 401A about a suggested PRACH allocation and the anchor node confirms a final PRACH allocation to the assisting node via message 1. Thereafter, the anchor and assisting nodes inform the user equipment 505 of the associated PRACH allocations via messages 2 and 3, respectively. According to some of the example embodiments, a user equipment is allocated two different PRACH grants at the same time in dual connectivity.

### Timing advance updates

The anchor 401A and assisting 401B node may measure the received UL timings periodically, which is done currently for single link cases, and ask the user equipment 505 to adjust the user equipment transmission timing accordingly relative it its current transmission timing.

According to some of the example embodiments, separate TA timers *timeAlignmentTimer* are defined for both the anchor 401A and assisting 401 B nodes. The user equipment 505 shall restart the timer for the corresponding node upon receiving a TA command for the node. According to some of the example embodiments, the anchor 401A may issue TA update commands to user equipment corresponding to both links while also allocating the PRACH resources for the transmissions if updates are needed for both links.

According to some of the example embodiments, the anchor 401A sends the TA updates commands for the assisting link along with a PRACH allocation if updates are only needed in assisting link. According to some of the example embodiments, the assisting node 401B sends the TA update request with PRACH allocation, while the anchor 401A is informed about it.

### Random access response

The network nodes send a Random Access Response (RAR) based on the PRACH measurements at the node receiver. The RAR provides information related to required timing advance, UL grant, applicable power adjustment value and Temporary C-RNTI.

According to some of the example embodiments, in dual connectivity UL and DL transmissions may be separated between nodes, DL is only available from one node to the user equipment. In that case, the nodes coordinate between themselves regarding the RAR and finally, the RAR is sent via the node that transmits in DL to the user equipment.

### Example node configurations

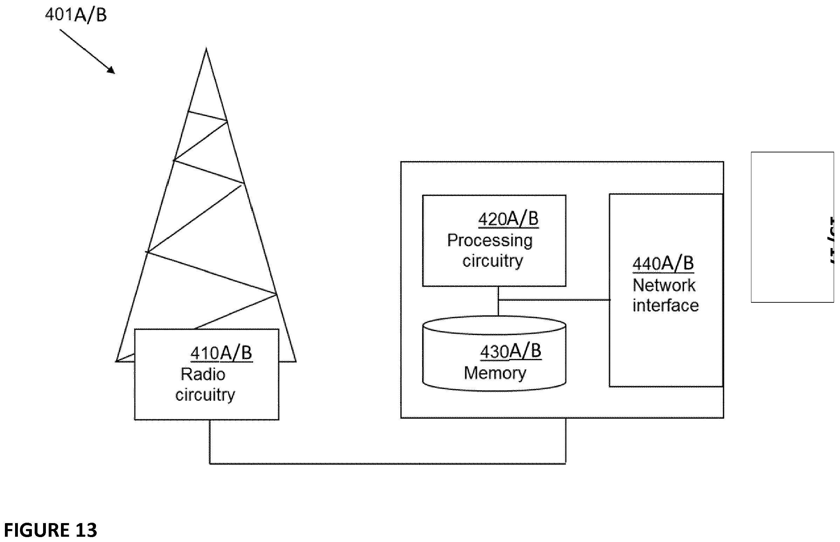

**Figure 13** illustrates an example node configuration of an anchor base station 401A and an assisting base station 401B or eNB which may perform some of the example embodiments described herein. The base stations 401A/B may comprise radio circuitry or a communication port 410A/B that may be configured to receive and/or transmit communication data, instructions, and/or messages. It should be appreciated that the radio circuitry or communication port 410A/B may be comprised as any number of transceiving, receiving, and/or transmitting units or circuitry. It should further be appreciated that the radio circuitry or communication port 410A/B may be in the form of any input or output communications port known in the art. The radio circuitry or communication port 410A/B may comprise RF circuitry and baseband processing circuitry (not shown).

The base stations 401A/B may also comprise a processing unit or circuitry 420A/B which may be configured to establish dual connectivity, as described herein. The processing circuitry 420A/B may be any suitable type of computation unit, for example, a microprocessor, digital signal processor (DSP), field programmable gate array (FPGA), or application specific integrated circuit (ASIC), or any other form of circuitry. The base stations 401A/B may further comprise a memory unit or circuitry 430A/B which may be any suitable type of computer readable memory and may be of volatile and/or non-volatile type. The memory 430A/B may be configured to store received, transmitted, and/or measured data, device parameters, communication priorities, and/or executable program instructions. The memory 430A/B may also be configured to store a maintained list of cells or assisting base stations serving a particular wireless terminal.

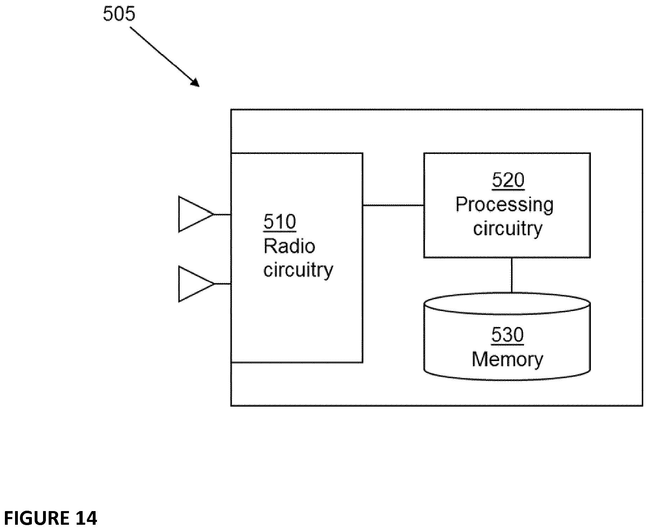

**Figure 14** illustrates an example node configuration of a wireless terminal or user equipment 501 which may perform some of the example embodiments described herein. The wireless terminal 501 may comprise radio circuitry or a communication port 510 that may be configured to receive and/or transmit communication data, instructions, and/or messages. It should be appreciated that the radio circuitry or communication port 510 may be comprised as any number of transceiving, receiving, and/or transmitting units or circuitry. It should further be appreciated that the radio circuitry or communication port 510 may be in the form of any input or output communications port known in the art. The radio circuitry or communication port 510 may comprise RF circuitry and baseband processing circuitry (not shown).

The wireless terminal 501 may also comprise a processing unit or circuitry 520 which may be configured to assist in establishing dual connectivity, as described herein. The processing circuitry 520 may be any suitable type of computation unit, for example, a microprocessor, digital signal processor (DSP), field programmable gate array (FPGA), or application specific integrated circuit (ASIC), or any other form of circuitry. The wireless terminal 501 may further comprise a memory unit or circuitry 530 which may be any suitable type of computer readable memory and may be of volatile and/or non-volatile type. The memory 530 may be configured to store received, transmitted, and/or measured data, device parameters, communication priorities, and/or executable program instructions.

### Example node operations

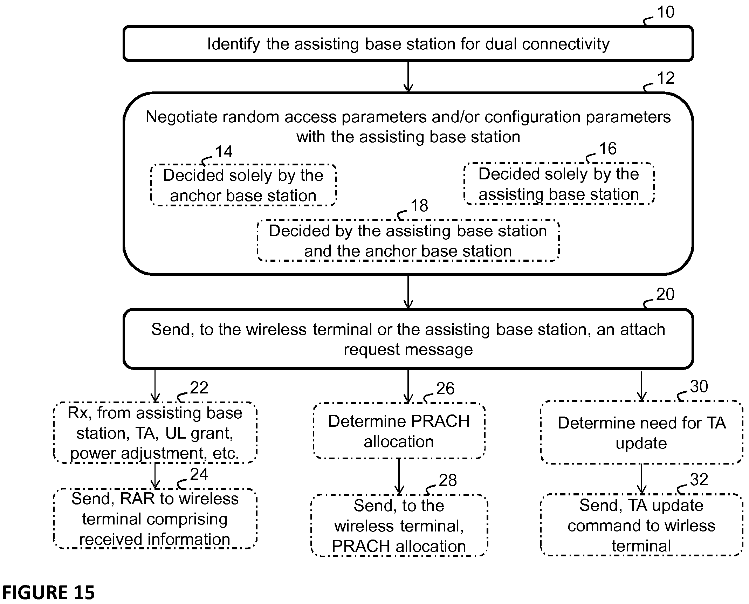

**Figure 15** is a flow diagram depicting example operations which may be taken by the anchor base station 401A to provide dual connectivity, as described herein. It should be appreciated that Figure 15 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be performed in addition to the operations of the broader example embodiments. It should be appreciated that these operations need not be performed in order. Furthermore, it should be appreciated that not all of the operations need to be performed. The example operations may be performed in any order and in any combination.

Of the following embodiments only the ones that are defined by the appended claims are considered as being part of the invention.

### Operation 10

The anchor base station 401A is configured to identify the assisting base station 401B for dual connectivity with the wireless terminal 505. The processing circuitry 420A is configured to identify the assisting base station for dual connectivity with the wireless terminal.

According to some of the example embodiments, the identifying 10 may be based on information regarding the wireless terminal which is available to the anchor base station. Examples of such information are user equipment measurement reports or a position of the wireless terminal.

### Operation 12

The anchor base station 401A is further configured to negotiate 12 random access parameters and/or configuration parameters with the assisting base station 401B. The processing circuitry 420A is configured to negotiate the random access parameters and/or configuration parameters with the assisting base station.

It should be appreciated that any negotiation between the anchor and assisting base station may be provided via messages passed between the anchor and assisting base stations. Such messages may be transmitted via an X2 interface or wirelessly. It should also be appreciated that pre-existing messages or new messages may be utilized for negotiations between the anchor and assisting base stations.

### Example operation 14

According to some of the example embodiments, the negotiating 12 may further comprise providing 14 the random access parameters and/or configuration parameters decided solely by the anchor bases station 401A. The processing circuitry 420A is configured to provide the random access parameters and/or configuration parameters decided solely by the anchor base station.

It should be appreciated that example operation 14 is described under at least the subheading *'Random access procedure in dual connectivity* and in Figures 7-9 via messages 1 or 1a and 1b.

### Example operation 16

According to some of the example embodiments, the negotiating 12 may further comprise providing 16 the random access parameters and/or configuration parameters decided solely by the assisting base station 401B. The processing circuitry 420A is configured to provide the random access parameters and/or configuration parameters decided solely by the assisting base station.

It should be appreciated that example operation 16 is described under at least the subheading *'Random access procedure in dual connectivity* and in Figures 7-9 via messages 1 or 1a and 1b.

### Example operation 18

According to some of the example embodiments, the negotiating 12 may further comprise providing 18 the random access parameters and/or configuration parameters decided by both the anchor 401A and assisting 401B base stations. The processing circuitry 420A is configured to provide the random access parameters and/or configuration parameters decided by both the anchor and assisting base stations.

It should be appreciated that example operation 18 is described under at least the subheading *'Random access procedure in dual connectivity* and in Figures 7-9 via messages 1 or 1a and 1b.

### Operation 20

The anchor base station 401A is further configured to send 20, to the wireless terminal 505 or the assisting base station 401B, an attach request message to establish a connection between the wireless terminal and the assisting base station. The attach message comprises the negotiated random access parameters and/or configuration parameters. The radio circuitry 410A is configured to send, to the wireless terminal or the assisting base station, the attach request message to establish the connection between the wireless terminal and the assisting base station.

It should be appreciated that example operation 20 is described under at least the subheading *'Random access procedure in dual connectivity* and in Figures 7-9 via message 2.

### Example operation 22

According to some of the example embodiments, the anchor base station 401A is further configured to receive 22, from the assisting base station 401B, timing advance, uplink grant and/or power adjustment information. The radio circuitry 410A is configured to receive, from the assisting base station, the timing advance, uplink grant and/or power adjustment information.

### Example operation 24

According to some of the example embodiments, the receiving 22 may further comprise sending 24, to the wireless terminal 505, a random access response message comprising the timing advance, uplink grant, and/or power adjustment information. The radio circuitry 410A is configured to send, to the wireless terminal, the timing advance, uplink grant, and/or power adjustment information.

It should be appreciated that example operations 22 and 24 are further described under at least the subheading *'Random access response'.* It should further be appreciated that any information exchange between base stations may occur via the X2 interface, wirelessly or any other interface. Furthermore, such communications may utilize pre-existing messages or new messages. It should further be appreciated that the RAR (random access response) may also comprise Channel State Information (CSI) request and UL delay, etc. According to some of the example embodiments, all uplink transmissions are configured to be handled by the assisting base station and all downlink transmissions are configured to be handled by the anchor base station, as described under the subheading *'Random access response'.*

### Example operation 26

According to some of the example embodiments, the anchor base station 401A is further configured to determine 26 at least one PRACH allocation for the wireless terminal 505. The processing circuitry 420A is configured to determine the at least one PRACH allocation for the wireless terminal.

Example operation 26 is described further under at least the subheading *'Coordinated PRACH allocations for multiple nodes'* and Figures 10-12. According to some of the example embodiments, the determining operation 26 may be performed solely by the anchor base station, where the anchor base station informs the assisting base station of what has been decided, as illustrated in Figures 10 and 11 via message 1. According to some of the example embodiments, the determining operation 26 may be performed via a negotiation or communications between the assisting and anchor base stations, or the assisting base station may make such decisions and inform the anchor base station, as illustrated in Figure 12 via message 1.

### Example operation 28

According to some of the example embodiments, the determining 26 may further comprise sending 28, to the wireless terminal 505, the at least one PRACH allocation with respect to the anchor base station only, or with respect to the anchor and assisting base stations. The radio circuitry 410A is configured to send, to the wireless terminal, the at least one PRACH allocation with respect to the anchor base station only, or with respect to the anchor and assisting base stations.

Example operation 28 is described further under at least the subheading *'Coordinated PRACH allocations for multiple nodes'* and Figures 10-12. According to some of the example embodiments, the sending operation 28 may comprise the anchor base station sending a PRACH allocation for the anchor base station solely, as depicted in Figure 12 via message 2. According to some of the example embodiment, the sending operation 28 may comprise the anchor base station sending separate PRACH allocations for the anchor base and the assisting base station, as illustrated in Figure 10 via message 2. According to some of the example embodiments, the sending operation 28 may comprise the anchor base station sending a single combined PRACH allocation for both the anchor and assisting base stations, as depicted in Figure 11 via message 2.

It should be appreciated that the example embodiments described in example operations 26 and 28 may assist in the prevention of contention based random access, as descried in Figure 3.

### Example operation 30

According to some of the example embodiments, the anchor base station is further configured to determine 30 a need for a timing advance update. The processing circuitry 420A is configured to determine the need for the timing advance update.

Example operation 30 is described further under at least the subheading *'Timing advance updates'.* According to some of the example embodiments, the determining operation 30 may be performed solely by the anchor base station, where the anchor base station informs the assisting base station of what has been decided. According to some of the example embodiments, the determining operation 30 may be performed via a negotiation or communications between the assisting and anchor base stations, or the assisting base station may make such decisions and inform the anchor base station.

### Example operation 32

According to some of the example embodiments, the determining 30 may further comprising sending 32, to the wireless terminal 505, a timing advance update command. The radio circuitry 410A is further configured to send, to the wireless terminal, the timing advance update command.

Example operation 32 is described further under at least the subheading *'Timing advance updates'.* According to some of the example embodiments, the sending operation 32 may comprise the anchor base station sending a timing advance command for the anchor base station solely. According to some of the example embodiment, the sending operation 32 may comprise the anchor base station sending separate timing advance commands for the anchor base and the assisting base station. According to some of the example embodiments, the sending operation 32 may comprise the anchor base station sending a single combined timing advance command for both the anchor and assisting base stations.

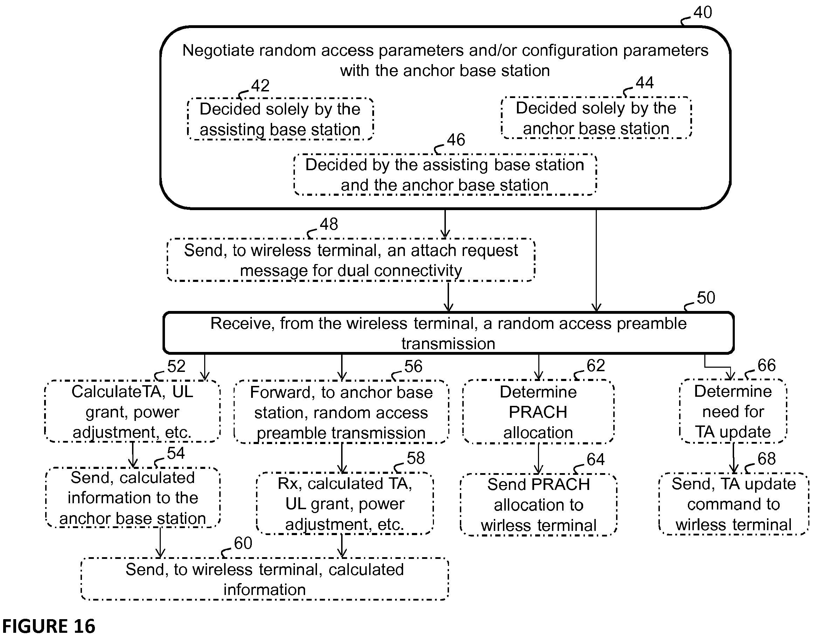

**Figure 16** is a flow diagram depicting example operations which may be taken by the assisting base station to provide dual connectivity, as described herein. It should be appreciated that Figure 16 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 40

The assisting base station 401B is configured to negotiate 40 random access parameters and/or configuration parameters with the anchor base station 401A. The processing circuitry 420B is configured to negotiate random access parameters and/or configuration parameters with the anchor base station.

Operation 40 is further described under at least the subheading *'Random access procedure in dual connectivity'.* It should be appreciated that any negotiation between the assisting and anchor base stations may be performed via messages passed between the two base stations. The messages may be transmitted, for example, via an X2 interface or wirelessly. It should also be appreciated that pre-existing messages or new messages may be utilized.

### Example operation 42

According to some of the example embodiments, the negotiating 40 may further comprise providing 42 the random access parameters and/or configuration parameters decided solely by the assisting base station 401B. The processing circuitry 420B is configured to provide the random access parameters and/or configuration parameters decided solely by the assisting base station 401B.

It should be appreciated that example operation 42 is described under at least the subheading *'Random access procedure in dual connectivity* and in Figures 7-9 via messages 1 or 1a and 1b.

### Example operation 44

According to some of the example embodiments, the negotiating 40 may further comprise providing 44 the random access parameters and/or configuration parameters decided solely by the anchor base station 401A. The processing circuitry 420B is configured to provide the random access parameters and/or configuration parameters decided solely by the anchor base station.

It should be appreciated that example operation 44 is described under at least the subheading *'Random access procedure in dual connectivity* and in Figures 7-9 via messages 1 or 1a and 1b.

### Example operation 46

According to some of the example embodiments, the negotiating 40 may further comprise providing 46 the random access parameters and/or configuration parameters decided by both the anchor 401A and assisting 401B base stations. The processing circuitry 420B is configured to provide the random access parameters and/or configuration parameters decided by both the anchor and assisting base stations.

It should be appreciated that example operation 46 is described under at least the subheading *'Random access procedure in dual connectivity* and in Figures 7-9 via messages 1 or 1a and 1b.

### Example operation 48

According to some of the example embodiments, the assisting base station 401B is further configured the send 48, to the wireless terminal 505, an attach request message for dual connectivity. The radio circuitry 410B is configured to send, to the wireless terminal, the attach request message for dual connectivity.

It should be appreciated that example operation 48 is described under at least the subheading *'Random access procedure in dual connectivity* and in Figures 8 and 9. As illustrated, the anchor base station may send the request to the assisting base station and in turn, the assisting base station may forward the request to the wireless terminal. It should also be appreciated that the anchor base station may send the attach request to the wireless terminal directly.

### Operation 50

The assisting base station 401B is further configured to receive, from the wireless terminal 505, a random access transmission for dual connectivity between the wireless terminal and the assisting base station. The radio circuitry 410B is configured to receive, from the wireless terminal, the random access transmission for dual connectivity between the wireless terminal and the assisting base station.

It should be appreciated that example operation 50 is described under at least the subheading *'Random access procedure in dual connectivity* and in Figures 7- 9 via message 3. It should be appreciated that the random access preamble transmission comprises a sequence with a specific signature.

### Example operation 52

According to some of the example embodiments, the receiving 50 may further comprise calculating 52 a timing advance, uplink grant, and/or power adjustment based on the received random access preamble. The processing circuitry 420B is configured to calculate the timing advance, uplink grant, and/or power adjustment based on the received random access preamble.

It should be appreciated that example operation 52 is further described under at least the subheading *'Random access response'.*

### Example operation 54

According to some of the example embodiments, the receiving 50 and the calculating 52 may further comprise sending 54, to the anchor base station 401A, the calculated timing advance, uplink grant, and/or power adjustment. The radio circuitry 410B is further configured to send, to the anchor base station, the calculated timing advance, uplink grant, and/or power adjustment.

It should be appreciated that example operation 54 is further described under at least the subheading *'Random access response'* and Figure 9 via message 4.

### Example operation 56

According to some of the example embodiments, the receiving 50 may further comprise forwarding 56, to the anchor base station 401A, the random access preamble transmission. The radio circuitry 410B is further configured to forward, to the anchor base station, the random access preamble transmission.

It should be appreciated that example operation 56 is further described under at least the subheading *'Random access response'.*

### Example operation 58

According to some of the example embodiments, the receiving 50 and the forwarding 56 may further comprise receiving 58, from the anchor base station, a calculated timing advance, uplink grant, and/or power adjustment based on the received random access preamble.

It should be appreciated that example operation 58 is further described under at least the subheading *'Random access response'.*

### Example operation 60

According to some of the example embodiments, example operations 52-58 may further comprise sending 60, to the wireless terminal 505, a random access response message comprising the calculated timing advance, uplink grant and/or power adjustment. The radio circuitry 410B is configured to send, to the wireless terminal, the random access response message comprising the calculated timing advance, uplink grant, and/or power adjustment.

It should be appreciated that example operation 60 is further described under at least the subheading *'Random access response'* and Figure 8 via message 4. According to some of the example embodiments, all uplink transmissions are configured to be handled by the anchor base station and all downlink transmissions are configured to be handled by the assisting base station.

### Example operation 62

According to some of the example embodiments, the assisting base station 401B is further configured to determine 62 at least one PRACH allocation for the wireless terminal 505. The processing circuitry 420B is configured to determine the at least one PRACH allocation for the wireless terminal.

Example operation 62 is described further under at least the subheading *'Coordinated PRACH allocations for multiple nodes'* and Figures 10-12. According to some of the example embodiments, the determining operation 62 may be performed solely by the anchor base station wherein the anchor base station informs the assisting base station of what has been decided, as illustrated in Figures 10 and 11 via message 1. According to some of the example embodiments, the determining operation 62 may be performed via a negotiation or communications between the assisting and anchor base stations, or the assisting base station may make such decisions and inform the anchor base station, as illustrated in Figure 12 via message 1.

### Example operation 64

According to some of the example embodiments, the determining 62 further comprises sending 64, to the wireless terminal 505, the at least one PRACH allocation with respect to the assisting base station only. The radio circuitry 410B is configured to send, to the wireless terminal, the at least one PRACH allocation with respect to the assisting base station only.

According to some of the example embodiments, the sending operation 64 may comprise the anchor base station sending a PRACH allocation for the anchor base station solely and the assisting base station sending a PRACH allocation separately and solely for the assisting base station, as depicted in Figure 12 via messages 2 and 3. According to some of the example embodiment, the sending operation 64 may comprise the anchor base station sending separate PRACH allocations for the anchor base and the assisting base station, as illustrated in Figure 10 via message 2. According to some of the example embodiments, the sending operation 64 may comprise the anchor base station sending a single combined PRACH allocation for both the anchor and assisting base stations, as depicted in Figure 11 via message 2.

It should be appreciated that the example embodiments described in example embodiments 62 and 64 may assist in the prevention of contention based random access, as descried in Figure 3.

### Example operation 66

According to some of the example embodiments, the assisting base station 401B is further configured to determine 66 a need for a timing advance update. The processing circuitry 420B is configured to determine the need for the timing advance update.

It should be appreciated that example operation 66 is further described under at least subheading *'Timing advance updates'.* According to some of the example embodiments, the determining operation 66 may be performed solely by the anchor base station, where the anchor base station informs the assisting base station of what has been decided. According to some of the example embodiments, the determining operation 66 may be performed via a negotiation or communications between the assisting and anchor base stations, or the assisting base station may make such decisions and inform the anchor base station.

### Example operation 68

According to some of the example embodiments, the determining 66 may further comprise sending 68, to the wireless terminal 505, a timing advance update command. The radio circuitry 410B is configured to send, to the wireless terminal, the timing advance update command.

It should be appreciated that example operation 66 is further described under at least subheading *'Timing advance updates'.* According to some of the example embodiments, the sending operation 68 may comprise the anchor base station sending a timing advance command for the anchor base station solely. According to some of the example embodiments, the sending operation 68 may comprise the anchor base station sending separate timing advance commands for the anchor base and the assisting base station. According to some of the example embodiments, the sending operation 68 may comprise the anchor base station sending a single combined timing advance command for both the anchor and assisting base stations.

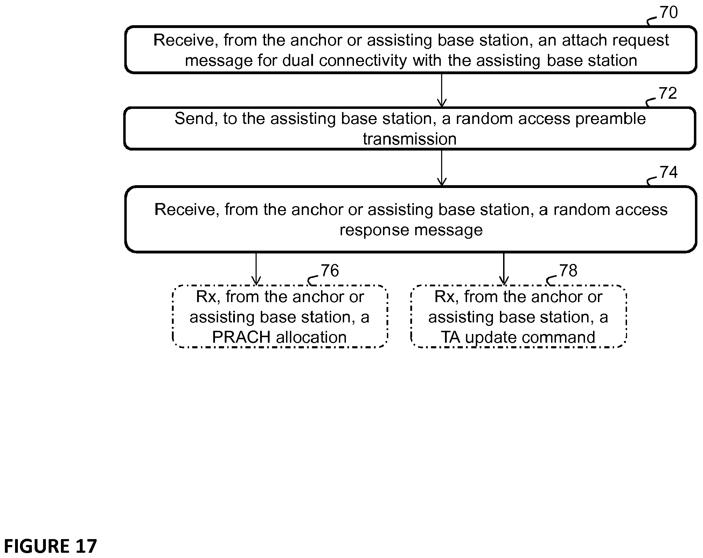

**Figure 17** is a flow diagram depicting example operations which may be taken by the wireless terminal to assist in providing dual connectivity, as described herein. It should be appreciated that Figure 17 comprises some operations which are illustrated with a solid border and some operations which are illustrated with a dashed border. The operations which are comprised in a solid border are operations which are comprised in the broadest example embodiment. The operations which are comprised in a dashed border are example embodiments which may be comprised in, or a part of, or are further operations which may be taken in addition to the operations of the boarder example embodiments. It should be appreciated that these operations need not be performed in order. Furthermore, it should be appreciated that not all of the operations need to be performed. The example operations may be performed in any order and in any combination.

### Operation 70

The wireless terminal 505 is configured to receive 70, from the anchor 401A or assisting 401B base stations, an attach request message for dual connectivity with the assisting base station. The radio circuitry 510 is configured to receive, from the anchor or assisting base stations, the attach request for dual connectivity with the assisting base station.

### Operation 72

The wireless terminal 505 is further configured to send 72, to the assisting base station 401B, a random access preamble transmission. The radio circuitry 510 is configured to send, to the assisting base station, the random access preamble transmission. It should be appreciated that the random comprises a sequence with a specific signature.

### Operation 74

The wireless terminal 505 is also configured to receive 74, from the anchor 401A or assisting 401B base stations, a random access response message comprising a calculated timing advance, uplink grant and/or power adjustment for dual connectivity. The radio circuitry 510 is configured to receive, from the anchor or assisting base stations, the random access response message comprising the calculated timing advance, uplink grant and/or power adjustment for dual connectivity.

### Example operation 76

According to some of the example embodiments, the wireless terminal 505 is also configured to receive 76, from the anchor 401A and/or the assisting 401B base stations, at least one PRACH allocation. The radio circuitry 510 is configured to receive, from the anchor and/or the assisting base stations, the at least one PRACH allocation.

Example operation 76 is described further under at least the subheading *'Coordinated PRACH allocations for multiple nodes'* and Figures 10-12. According to some of the example embodiments, the anchor base station may solely determine the PRACH allocation, wherein the anchor base station informs the assisting base station of what has been decided (e.g., see Figures 15 and 16). According to some of the example embodiments, the determination may be performed via a negotiation or communications between the assisting and anchor base stations, or the assisting base station may make such decisions and inform the anchor base station (e.g., see Figure 17).

According to some of the example embodiments, the sending of the PRACH allocation may comprise the anchor base station sending a PRACH allocation for the anchor base station solely and the assisting base station sending a PRACH allocation separately and solely for the assisting base station, as depicted in Figure 17. According to some of the example embodiment, the sending may comprise the anchor base station sending separate PRACH allocations for the anchor base and the assisting base station, as illustrated in Figure 15. According to some of the example embodiments, the sending may comprise the anchor base station sending a single combined PRACH allocation for both the anchor and assisting base stations, as depicted in Figure 16.

It should be appreciated that the example embodiments described in example embodiment 76 may assist in the prevention of contention based random access, as descried in Figure 8.

### Example operation 78

According to some of the example embodiments, the wireless terminal 505 is further configured to receive 78, from the anchor 401A or the assisting 401B base stations, a timing advance command. The radio circuitry 510 is configured to receive, from the anchor or the assisting base stations, the timing advance command.

It should be appreciated that example operation 78 is further described under at least subheading *'Timing advance updates'.* According to some of the example embodiments, the determination of the need for such a command may be performed solely by the anchor base station wherein the anchor base station informs the assisting base station of what has been decided. According to some of the example embodiments, the determination may be performed via a negotiation or communications between the assisting and anchor base stations, or the assisting base station may make such decisions and inform the anchor base station.

According to some of the example embodiments, the sending of the command may comprise the anchor base station sending a timing advance command for the anchor base station solely. According to some of the example embodiment, the sending may comprise the anchor base station sending separate timing advance commands for the anchor base and the assisting base station. According to some of the example embodiments, the sending may comprise the anchor base station sending a single combined timing advance command for both the anchor and assisting base stations.

It should be noted that although terminology from 3GPP LTE has been used herein to explain the example embodiments, this should not be seen as limiting the scope of the example embodiments to only the aforementioned system. Other wireless systems, comprising HSPA, WCDMA, WiMax, UMB, WiFi and GSM, may also benefit from the example embodiments disclosed herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatuses, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

Also note that terminology such as user equipment should be considered as nonlimiting. A wireless terminal or user equipment (UE) as the term is used herein, is to be broadly interpreted to comprise a radiotelephone having ability for Internet/intranet access, web browser, organizer, calendar, a camera, e.g., video and/or still image camera, a sound recorder, e.g., a microphone, and/or global positioning system (GPS) receiver; a personal communications system (PCS) user equipment that may combine a cellular radiotelephone with data processing; a personal digital assistant (PDA) that can comprise a radiotelephone or wireless communication system; a laptop; a camera, e.g., video and/or still image camera, having communication ability; and any other computation or communication device capable of transceiving, such as a personal computer, a home entertainment system, a television, etc. It should be appreciated that the term user equipment may also comprise any number of connected devices, wireless terminals or machine-to-machine devices.

It should further be appreciated that the term dual connectivity should not be limited to a user equipment or wireless terminal being connected to only two base stations. In dual connectivity a wireless terminal may be connected to any number of base stations.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

## Claims

1. A method, in an anchor base station, for establishing a second link between a wireless terminal and an assisting base station, where the wireless terminal is served by the anchor base station via a first link, the method comprising:
identifying **(10)** the assisting base station for establishing the second link with the wireless terminal;
negotiating **(12)** random access parameters with the assisting base station; and
sending **(20)**, to the wireless terminal, an attach request message to establish the second link between the wireless terminal and the assisting base station, wherein the attach request message comprises the negotiated random access parameters.

2. The method of claim 1, wherein the negotiating **(12)** further comprises providing **(14)** the random access parameters decided solely by the anchor base station, providing **(16)** the random access parameters decided solely by the assisting base station, or providing **(18)** the random access parameters decided by both the anchor and assisting base station.

3. The method of any of claims 1-2, further comprising:
determining **(26)** at least one Physical Random Access Chanel, PRACH, allocation for the wireless terminal; and
sending **(28)**, to the wireless terminal, the at least one PRACH allocation with respect to the anchor base station only, or with respect to the anchor and assisting base station.

4. An anchor base station **(401A)** for establishing a second link between a wireless terminal and an assisting base station, where the wireless terminal is served by the anchor base station via a first link, the anchor base station comprising:
processing circuitry **(420A)** configured to identify the assisting base station for establishing a second link with the wireless terminal;
the processing circuitry **(420A)** further configured to negotiate random access parameters with the assisting base station; and
radio circuitry **(410A)** configured to send, to the wireless terminal, an attach request message to establish the second link between the wireless terminal and the assisting base station, wherein the attach request message comprises the negotiated random access parameters.

5. The anchor base station **(401A)** of claim 4, wherein the negotiation of the random access parameters, processing circuitry **(420A)** is further configured to provide the random access parameters decided solely by the anchor base station, provide the random access parameters decided solely by the assisting base station, or provide the random access parameters decided by both the anchor and assisting base station.

6. A method, in an assisting base station, for establishing a second link with a wireless terminal, where the wireless terminal is served by an anchor base station via a first link, the method comprising:
negotiating **(40)** random access parameters with the anchor base station; and
receiving **(50)**, from the wireless terminal, a random access preamble transmission for establishing the second link between the wireless terminal and the assisting base station.

7. An assisting base station **(401B)** for establishing a second link with a wireless terminal and the assisting base station, where the wireless terminal is served by an anchor base station via a first link, the assisting base station comprising:
processing circuitry **(420B)** configured to negotiate random access parameters with the anchor base station; and
radio circuitry **(410B)** configured to receive, from the wireless terminal, a random access preamble transmission for establishing the second link between the wireless terminal and the assisting base station.

8. A method, in wireless terminal, for establishing a second link with an assisting base station, where the wireless terminal is served by an anchor base station via a first link, the method comprising:
receiving **(70)**, from the anchor base station, an attach request message for establishing the second link with the assisting base station;
sending **(72)**, to the assisting base station, a random access preamble transmission; and
receiving **(74)**, from the assisting base station, a random access response message comprising a calculated timing advance and an uplink grant for the second link, wherein the attach request message comprises random access parameters.

9. The method of claim 8, further comprising receiving **(76)**, from the anchor and/or assisting base station, at least one PRACH allocation.

10. The method of any of claims 8-9, further comprising receiving **(78)**, from the anchor or assisting base station, a timing advance update command.

11. A wireless terminal **(505)** for establishing a second link with an assisting base station via a first link, where the wireless terminal is served by an anchor base station, the wireless terminal comprising:
radio circuitry **(510)** configured to receive, from the anchor base station, an attach request message for establishing the second link with the assisting base station;
radio circuitry **(510)** configured to send, to the assisting base station, a random access preamble transmission; and
radio circuitry **(510)** configured to receive, from the assisting base station, a random access response message comprising a calculated timing advance and an uplink grant for the second link, wherein the attach request message comprises random access parameters.

12. The wireless terminal **(505)** of claim 11, wherein the radio circuitry **(510)** is further configured to receive, from the anchor and/or assisting base station, at least one PRACH allocation.

13. The wireless terminal **(505)** of any of claims 11-12, wherein the radio circuitry **(510)** is further configured to receive, from the anchor or assisting base station, a timing advance update command.

## Patentansprüche

1. Verfahren, in einer Ankerbasisstation, zum Herstellen einer zweiten Verknüpfung zwischen einem drahtlosen Endgerät und einer unterstützenden Basisstation, wobei das drahtlose Endgerät durch die Ankerbasisstation über eine erste Verknüpfung bedient wird, wobei das Verfahren Folgendes umfasst:
Identifizieren **(10)** der unterstützenden Basisstation zum Herstellen der zweiten Verknüpfung mit dem drahtlosen Endgerät;
Verhandeln **(12)** von Random-Access-Parametern mit der unterstützenden Basisstation; und
Senden **(20)**, an das drahtlose Endgerät, einer Anschlussaufforderungsnachricht zum Herstellen der zweiten Verknüpfung zwischen dem drahtlosen Endgerät und der unterstützenden Basisstation, wobei die Anschlussaufforderungsnachricht die verhandelten Random-Access-Parameter umfasst.

2. Verfahren nach Anspruch 1, wobei das Verhandeln **(12)** ferner Bereitstellen **(14)** der Random-Access-Parameter, die nur durch die Ankerbasisstation festgelegt werden, Bereitstellen **(16)** der Random-Access-Parameter, die nur durch die unterstützende Basisstation festgelegt werden, oder Bereitstellen **(18)** der Random-Access-Parameter, die durch die Ankerbasisstation und die unterstützende Basisstation festgelegt werden, umfasst.

3. Verfahren nach einem der Ansprüche 1 bis 2, ferner umfassend:
Bestimmen **(26)** von zumindest einer Zuweisung eines physikalischen Random-Access-Kanals, PRACH, für das drahtlose Endgerät; und
Senden **(28)**, an das drahtlose Endgerät, der zumindest einen PRACH-Zuweisung nur in Bezug auf die Ankerbasisstation oder in Bezug auf die Ankerbasisstation und die unterstützende Basisstation.

4. Ankerbasisstation **(401A)** zum Herstellen einer zweiten Verknüpfung zwischen einem drahtlosen Endgerät und einer unterstützenden Basisstation, wobei das drahtlose Endgerät durch die Ankerbasisstation über eine erste Verknüpfung bedient wird, wobei die Ankerbasisstation Folgendes umfasst:
Verarbeitungsschaltung **(420A)**, die dazu konfiguriert ist, die unterstützende Basisstation zum Herstellen einer zweiten Verknüpfung mit dem drahtlosen Endgerät zu identifizieren;
wobei die Verarbeitungsschaltung **(420A)** ferner dazu konfiguriert ist, Random-Access-Parameter mit der unterstützenden Basisstation zu verhandeln; und
Funkschaltung **(410A)**, konfiguriert zum Senden, an das drahtlose Endgerät, einer Anschlussaufforderungsnachricht zum Herstellen der zweiten Verknüpfung zwischen dem drahtlosen Endgerät und der unterstützenden Basisstation, wobei die Anschlussaufforderungsnachricht die verhandelten Random-Access-Parameter umfasst.

5. Ankerbasisstation **(401A)** nach Anspruch 4, wobei bei der Verhandlung der Random-Access-Parameter die Verarbeitungsschaltung **(420A)** ferner dazu konfiguriert ist, die Random-Access-Parameter bereitzustellen, die nur durch die Ankerbasisstation festgelegt werden, die Random-Access-Parameter bereitzustellen, die nur durch die unterstützende Basisstation festgelegt werden, oder die Random-Access-Parameter bereitzustellen, die durch die Ankerbasisstation und die unterstützende Basisstation festgelegt werden.

6. Verfahren, in einer unterstützenden Basisstation, zum Herstellen einer zweiten Verknüpfung mit einem drahtlosen Endgerät, wobei das drahtlose Endgerät durch eine Ankerbasisstation über eine erste
Verknüpfung bedient wird, wobei das Verfahren Folgendes umfasst:
Verhandeln **(40)** von Random-Access-Parametern mit der Ankerbasisstation; und
Empfangen **(50)**, von dem drahtlosen Endgerät, einer Random-Access-Präambelübertragung zum Herstellen der zweiten Verknüpfung zwischen dem drahtlosen Endgerät und der unterstützenden Basisstation.

7. Unterstützende Basisstation **(401B)** zum Herstellen einer zweiten Verknüpfung mit einem drahtlosen Endgerät und der unterstützenden Basisstation, wobei das drahtlose Endgerät durch eine Ankerbasisstation über eine erste Verknüpfung bedient wird, wobei die unterstützende Basisstation Folgendes umfasst:
Verarbeitungsschaltung **(420B)** die dazu konfiguriert ist, Random-Access-Parameter mit der Ankerbasisstation zu verhandeln; und
Funkschaltung **(410B)**, konfiguriert zum Empfangen, von dem drahtlosen Endgerät, einer Random-Access-Präambelübertragung zum Herstellen der zweiten Verknüpfung zwischen dem drahtlosen Endgerät und der unterstützenden Basisstation.

8. Verfahren, in einem drahtlosen Endgerät, zum Herstellen einer zweiten Verknüpfung mit einer unterstützenden Basisstation, wobei das drahtlose Endgerät durch eine Ankerbasisstation über eine erste Verknüpfung bedient wird, wobei das Verfahren Folgendes umfasst:
Empfangen **(70)**, von der Ankerbasisstation, einer Anschlussaufforderungsnachricht zum Herstellen der zweiten Verknüpfung mit der unterstützenden Basisstation;
Senden **(72)**, an die unterstützende Basisstation, einer Random-Access-Präambelübertragung; und
Empfangen **(74)**, von der unterstützenden Basisstation, einer Random-Access-Antwortnachricht, umfassend einen berechneten Zeitvorlauf und eine Uplink-Erlaubnis für die zweite Verknüpfung, wobei die Anschlussaufforderungsnachricht Random-Access-Parameter umfasst.

9. Verfahren nach Anspruch 8, ferner umfassend Empfangen **(76)**, von der Ankerbasisstation und/oder unterstützenden Basisstation, von zumindest einer PRACH-Zuweisung.

10. Verfahren nach einem der Ansprüche 8 bis 9, ferner umfassend Empfangen **(78)**, von der Ankerbasisstation oder unterstützenden Basisstation, eines Zeitvorlauf-Aktualisierungsbefehls.

11. Drahtloses Endgerät **(505)** zum Herstellen einer zweiten Verknüpfung mit einer unterstützenden Basisstation über eine erste Verknüpfung, wobei das drahtlose Endgerät durch eine Ankerbasisstation bedient wird, wobei das Verfahren Folgendes umfasst:
Funkschaltung **(510)**, konfiguriert zum Empfangen, von der Ankerbasisstation, einer Anschlussaufforderungsnachricht zum Herstellen der zweiten Verknüpfung mit der unterstützenden Basisstation;
Funkschaltung **(510)**, die dazu konfiguriert ist, an die unterstützende Basisstation eine Random-Access-Präambelübertragung zu senden; und
Funkschaltung **(510)**, die dazu konfiguriert ist, von der unterstützenden Basisstation eine Random-Access-Antwortnachricht, umfassend einen berechneten Zeitvorlauf und eine berechnete Uplink-Erlaubnis für die zweite Verknüpfung zu empfangen, wobei die Anschlussaufforderungsnachricht Random-Access-Parameter umfasst.

12. Drahtloses Endgerät **(505)** nach Anspruch 11, wobei die Funkschaltung **(510)** ferner dazu konfiguriert ist, von der Ankerbasisstation und/oder unterstützenden Basisstation zumindest eine PRACH-Zuweisung zu empfangen.

13. Drahtloses Endgerät **(505)** nach einem der Ansprüche 11 bis 12, wobei die Funkschaltung **(510)** ferner dazu konfiguriert ist, von der Ankerbasisstation und/oder unterstützenden Basisstation einen Zeitvorlauf-Aktualisierungsbefehl zu empfangen.

## Revendications

1. Procédé, dans une station de base d'ancrage, pour établir une deuxième liaison entre un terminal sans fil et une station de base d'assistance, où le terminal sans fil est desservi par la station de base d'ancrage par l'intermédiaire d'une première liaison, le procédé comprenant :
l'identification **(10)** de la station de base d'assistance pour établir la deuxième liaison avec le terminal sans fil ;
la négociation **(12)** de paramètres d'accès aléatoire avec la station de base d'assistance ; et
l'envoi **(20)**, au terminal sans fil, d'un message de demande de rattachement pour établir la deuxième liaison entre le terminal sans fil et la station de base d'assistance, dans laquelle le message de rattachement comprend les paramètres d'accès aléatoire négociés.

2. Procédé selon la revendication 1, dans lequel la négociation **(12)** comprend en outre la fourniture **(14)** des paramètres d'accès aléatoire décidés uniquement par la station de base d'ancrage, la fourniture **(16)** des paramètres d'accès aléatoire décidés uniquement par la station de base d'assistance, ou la fourniture **(18)** des paramètres d'accès aléatoire décidés par à la fois la station de base d'ancrage et la station de base d'assistance.

3. Procédé selon l'une quelconque des revendications 1 à 2, comprenant en outre :
la détermination **(26)** d'au moins une attribution de canal physique d'accès aléatoire PRACH pour le terminal sans fil ; et
l'envoi **(28)**, au terminal sans fil, de l'au moins une attribution de PRACH par rapport uniquement à la station de base d'ancrage, ou par rapport à la station de base d'ancrage et à la station de base d'assistance.

4. Station de base d'ancrage **(401A)** pour établir une deuxième liaison entre un terminal sans fil et une station de base d'assistance, où le terminal sans fil est desservi par la station de base d'ancrage par l'intermédiaire d'une première liaison, la station de base d'ancrage comprenant :
des circuits de traitement **(420A)** configurés pour identifier la station de base d'assistance pour établir une deuxième liaison avec le terminal sans fil ;
les circuits de traitement **(420A)** configurés en outre pour négocier des paramètres d'accès aléatoire avec la station de base d'assistance ; et
des circuits radio **(410A)** configurés pour envoyer, au terminal sans fil, un message de demande de rattachement pour établir la deuxième liaison entre le terminal sans fil et la station de base d'assistance, dans laquelle le message de de demande de rattachement comprend les paramètres d'accès aléatoire négociés.

5. Station de base d'ancrage **(401A)** selon la revendication 4, dans laquelle la négociation des paramètres d'accès aléatoire, les circuits de traitement **(420A)** sont en outre configurés pour fournir les paramètres d'accès aléatoire décidés uniquement par la station de base d'ancrage, fournir les paramètres d'accès aléatoire décidés uniquement par la station de base d'assistance, ou fournir les paramètres d'accès aléatoire décidés à la fois par la station de base d'ancrage et la station de base d'assistance.

6. Procédé, dans une station de base d'assistance, pour établir une deuxième liaison avec un terminal sans fil, où le terminal sans fil est desservi par une station de base d'ancrage par l'intermédiaire d'une première liaison, ledit procédé comprenant :
la négociation **(40)** de paramètres d'accès aléatoire avec la station de base d'ancrage ; et
la réception **(50)**, en provenance du terminal sans fil, d'une transmission de préambule d'accès aléatoire pour établir la deuxième liaison entre le terminal sans fil et la station de base d'assistance.

7. Station de base d'assistance **(401B)** pour établir une deuxième liaison avec un terminal sans fil et la station de base d'assistance, où le terminal sans fil est desservi par une station de base d'ancrage par l'intermédiaire d'une première liaison, la station de base d'assistance comprenant :
des circuits de traitement **(420B)** configurés pour négocier des paramètres d'accès aléatoire avec la station de base d'ancrage ; et
des circuits radio **(410B)** configurés pour recevoir, en provenance du terminal sans fil, une transmission de préambule d'accès aléatoire pour établir la deuxième liaison entre le terminal sans fil et la station de base d'assistance.

8. Procédé, dans un terminal sans fil, pour établir une deuxième liaison avec une station de base d'assistance, où le terminal sans fil est desservi par une station de base d'ancrage par l'intermédiaire d'une première liaison, le procédé comprenant :
la réception **(70)**, en provenance de la station de base d'ancrage, d'un message de demande de rattachement pour établir la deuxième liaison avec la station de base d'assistance ;
l'envoi **(72)**, à la station de base d'assistance, d'une transmission de préambule d'accès aléatoire ; et
la réception **(74)**, en provenance de la station de base d'assistance, d'un message de réponse d'accès aléatoire comprenant une avance de synchronisation calculée et une autorisation de liaison montante pour la deuxième liaison, dans lequel le message de demande de rattachement comprend des paramètres d'accès aléatoire.

9. Procédé selon la revendication 8, comprenant en outre la réception **(76)**, en provenance de la station de base d'ancrage et/ou de la station de base d'assistance, d'au moins une attribution de PRACH.

10. Procédé selon l'une quelconque des revendications 8 à 9, comprenant en outre la réception **(78)**, en provenance de la station de base d'ancrage ou de la station de base d'assistance, d'une commande de mise à jour d'avance de synchronisation.

11. Terminal sans fil **(505)** pour établir une deuxième liaison avec une station de base d'assistance par l'intermédiaire d'une première liaison, où le terminal sans fil est desservi par une station de base d'ancrage, le terminal sans fil comprenant :
des circuits radio **(510)** configurés pour recevoir, en provenance de la station de base d'ancrage, un message de demande de rattachement pour établir la deuxième liaison avec la station de base d'assistance ;
des circuits radio **(510)** configurés pour envoyer, à la station de base d'assistance, une transmission de préambule d'accès aléatoire ; et
des circuits radio **(510)** configurés pour recevoir, en provenance de la station de base d'assistance, un message de réponse d'accès aléatoire comprenant une avance de synchronisation calculée et une autorisation de liaison montante pour la deuxième liaison, dans lequel le message de demande de rattachement comprend des paramètres d'accès aléatoire.

12. Terminal sans fil **(505)** selon la revendication 11, dans lequel les circuits radio **(510)** sont en outre configurés pour recevoir, en provenance de la station de base d'ancrage et/ou de la station de base d'assistance, au moins une attribution PRACH.

13. Terminal sans fil **(505)** selon l'une quelconque des revendications 11 à 12, dans laquelle les circuits radio **(510)** sont en outre configurés pour recevoir, en provenance de la station de base d'ancrage ou de la station de base d'assistance, une commande de mise à jour d'avance de synchronisation.
